# EUROPÄISCHE PATENTANMELDUNG

(11) **EP 4 296 150 A1**
(43) Veröffentlichungstag der Anmeldung: **27.12.2023**
(21) Anmeldenummer: 22180967.6
(22) Anmeldetag: 24.06.2022
(51) Int. Cl.: B62D 33/04

(54) **KOFFERAUFBAU MIT FUNKTIONSEINRICHTUNG IM RÜCKWANDRAHMEN UND VERFAHREN ZU DESSEN HERSTELLUNG**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschreiben und dargestellt ist ein Kofferaufbau (1) eines Nutzfahrzeugs (N), insbesondere Lastkraftwagen, Anhänger oder Sattelauflieger, mit festen, jeweils ein Seitenwandpaneel (7) umfassenden Seitenwänden (6) und einem festen, ein Dachpaneel (5) umfassenden Dach (4), wobei die Seitenwandpaneele (7) und das Dachpaneel (5) eine strukturgebende, einem Laderaum (14) des Kofferaufbaus (1) zugeordnete innere Decklage (26), eine strukturgebende, der Umgebung des Kofferaufbaus (1) zugeordnete äußere Decklage (27) und eine zwischen der inneren Decklage (26) und der äußeren Decklage (27) angeordnete Kernlage (28) aus einem extrudierten und/oder geschäumten Kunststoff aufweisen, wobei das Dach (4) einen den hinteren Abschluss des Dachs (4) bildenden, sich wenigstens im Wesentlichen über die gesamte Breite des Dachpaneels (5) erstreckenden und mit dem Dachpaneel (5) verbundenen Dachquerholm (19) aufweist, wobei in einem Innenraum (53) des Dachquerholms (19) wenigstens teilweise eine elektrische, pneumatische oder hydraulische Funktionseinrichtung (55) und ein extrudierter und/oder geschäumter Kunststoff zur thermischen Isolierung des Dachquerholms (19) angeordnet sind. Damit der Kofferaufbau einfacher und günstiger gefertigt werden kann, ist vorgesehen, dass der Dachquerholm (19) umfassend den fertig extrudierten und/oder geschäumten Kunststoff mit dem Dachpaneel (5) umfassend den fertig extrudierten und/oder geschäumten Kunststoff der Kernlage (28) verbunden worden ist.

## Beschreibung

Die Erfindung betrifft einen Kofferaufbau eines Nutzfahrzeugs, insbesondere Lastkraftwagen, Anhänger oder Sattelauflieger, mit festen, jeweils ein Seitenwandpaneel umfassenden Seitenwänden und einem festen ein Dachpaneel umfassenden Dach, wobei die Seitenwandpaneele und das Dachpaneel eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem extrudierten und/oder geschäumten Kunststoff aufweisen, wobei das Dach einen den hinteren Abschluss des Dachs bildenden, sich wenigstens im Wesentlichen über die gesamte Breite des Dachpaneels erstreckenden und mit dem Dachpaneel verbundenen Dachquerholm aufweist, wobei in einem Innenraum des Dachquerholms wenigstens teilweise eine elektrische, pneumatische oder hydraulische Funktionseinrichtung und ein extrudierter und/oder geschäumter Kunststoff zur thermischen Isolierung des Dachquerholms angeordnet sind. Ferner betrifft die Erfindung ein Verfahren zur Herstellung eines Kofferaufbaus.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Rückwandrahmen vorgesehen, an dem zwei Türen in Form von Rückwandtüren oder ein Rolltor gehalten sein können, um den Rückwandrahmen wahlweise zu verschließen oder zum Be- und Entladen durch den Rückwandrahmen freizugeben. Gegenüber von dem Rückwandrahmen ist eine Stirnwand vorgesehen. Bei Kofferaufbauten, insbesondere in Form von Kühlkofferaufbauten, sind die Seitenwände, das Dach, die Stirnwand und die Rückwandtüren regelmäßig aus Seitenwandpaneelen, einem Dachpaneel, einem Stirnwandpaneel und Türpaneelen gebildet. Jedes dieser Paneele weist dabei bedarfsweise zwei strukturgebende Decklagen auf, zwischen denen eine Kernlage aus einem geschäumten Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen. Jede Decklage kann dabei bedarfsweise mehrlagig ausgebildet sein und dient der Aussteifung der Paneele. Eine Decklage weist daher wenigstens eine Schicht aus einem Metall und/oder einem faserverstärkten Kunststoff auf.

Die Bodenstruktur von Kofferaufbauten, insbesondere von Kühlkofferaufbauten, ist in Form eines Bodenpaneels ausgebildet, wobei eine Oberbodenlage vorgesehen ist, die den Ladeboden zum Abstellen der Ladung bereitstellt. Gegenüberliegend ist eine Unterbodenlage vorgesehen, die die Bodenstruktur nach unten abschließt und mit der der Kofferaufbau auf einem Chassis oder Fahrwerk des Nutzfahrzeugs aufgesetzt werden kann. Zwischen der Oberbodenlage und der Unterbodenlage ist eine Bodenlage vorgesehen, die zur Aussteifung der Bodenstruktur und zu Isolationszwecken eine Mehrzahl von Bodenquerträgern und dazwischen einen Kunststoff aufweist. Bei den Bodenquerträgern handelt es sich wegen der geringen Wärmeleitfähigkeit vorzugsweise um solche aus Holz. Der Kunststoff ist aus demselben Grunde meist als geschäumter Kunststoff ausgebildet.

Der Rückwandrahmen setzt sich zusammen aus vier verschiedenen Holmstrukturen, wobei zwei Seitenholme von den Seitenwänden, ein Dachquerholm von dem Dach und ein Bodenquerholm von der Bodenstruktur bereitgestellt werden. Die Seitenholme sind Teil der Seitenwände und erstrecken sich wenigstens im Wesentlichen über die gesamte Höhe der Seitenwandpaneele. Der Dachquerholm wird von dem Dach gebildet und erstreckt sich wenigstens im Wesentlichen über die gesamte Breite des Dachpaneels. Der Bodenquerholm wird von der Bodenstruktur gebildet und erstreckt sich wenigstens im Wesentlichen über die gesamte Breite des Bodenpaneels. Der Rückwandrahmen insgesamt wird dabei beim Fügen der Seitenwände mit der Bodenstruktur und mit dem Dach aus den unterschiedlichen Holmstrukturen zusammengesetzt.

Dem Rückwandrahmen gegenüber wird der Kofferaufbau von einer Stirnwand abgeschlossen, an der im Falle eines Kühlkofferaufbaus eine Transportkältemaschine vorgesehen ist, die Luft aus dem Laderaum ansaugt, herunterkühlt und zurück in den Laderaum bläst. Durch die Kernlagen aus geschäumtem Kunststoff und die ebenfalls geschäumten Kunststoff umfassende Bodenlage wird von außen nur sehr wenig Wärme in den Laderaum geleitet.

An den Rückwandrahmen, insbesondere dem Dachquerholm, werden in vielen Fällen elektrische Funktionseinrichtungen wie etwa Rückleuchten und/oder Blinker montiert. Hierfür ist insbesondere im Innenraum des Dachquerholms der benötigte Platz vorgesehen, auch wenn die Funktionseinrichtungen von außen sichtbar sind oder teilweise gegenüber dem Dachquerholm nach hinten oder oben vorstehen können. Diese Funktionseinrichtungen müssen entsprechend verkabelt werden, wobei die Spannungsversorgung regelmäßig von der Stirnwand etwa über die Zugmaschine bereitgestellt wird. Die Verkabelung der entsprechenden Funktionseinrichtungen ist daher mit einem nicht unerheblichen Aufwand verbunden.

Dies gilt insbesondere in sogenannten Kühlkofferaufbauten, da die Anschlussleitungen dann meist wenigstens teilweise in der Kernlage des Dachpaneels integriert werden müssen, was das Ausschäumen der Kernlage deutlich aufwendiger werden lassen kann. Zudem ist es zum Zwecke der Wärmeisolation bevorzugt, wenn der freie Innenraum des Dachquerholms mit einem Kunststoff ausgeschäumt wird. Zum Ausschäumen von Dachpaneel und Dachquerhom werden diese zunächst ohne den Kunststoff gefügt und die elektrische Funktionseinrichtung an eine Anschlussleitung angeschlossen. Anschließend erfolgt ein gemeinsames Ausschäumen der Kernlage des Dachpaneels und des Dachquerholms mit einem Kunststoff, um eine zufriedenstellende thermische Isolation des Kofferaufbaus bereitzustellen. Die damit einhergehenden Fertigungsaufwände und Fertigungskosten sind naturgemäß recht hoch.

Daher liegt der vorliegenden Erfindung die Aufgabe zugrunde, den Kofferaufbau und das Verfahren jeweils der eingangs genannten und zuvor näher beschriebenen Art derart auszugestalten und weiterzubilden, dass der Kofferaufbau einfacher und günstiger gefertigt werden kann.

Diese Aufgabe ist bei einem Kofferaufbau nach dem Oberbegriff von Anspruch 1 dadurch gelöst, dass der Dachquerholm umfassend den fertig extrudierten und/oder geschäumten Kunststoff mit dem Dachpaneel umfassend den fertig extrudierten und/oder geschäumten Kunststoff der Kernlage verbunden worden ist.

Die genannte Aufgabe ist zudem verfahrensmäßig nach Anspruch 11 gelöst durch ein Verfahren zur Herstellung eines Kofferaufbaus nach einem der Ansprüche 1 bis 10,
- bei dem wenigstens eine Funktionseinrichtung wenigstens teilweise in einen Innenraum des Dachholms eingebracht wird,
- bei dem nach dem Einbringen der Funktionseinrichtung wenigstens in den Großteil des verbleibenden Innenraums des Dachquerholms ein extrudierter und/oder geschäumter Kunststoff eingebracht wird,
- bei dem zwischen der inneren Decklage und der äußeren Decklage des Dachpaneels die Kernlage aus einem extrudierten und/oder geschäumten Kunststoff vorgesehen wird und
- bei dem nach dem separaten Einbringen des Kunststoffs in den Dachquerholm und das Dachpaneel und nach dem separaten wenigstens teilweisen Aushärten des Kunststoffs in dem Dachquerholm und dem Dachpaneel der Dachquerholm mit dem Dachpaneel verbunden wird.

Anstelle den Dachquerholm zusammen oder separat nach dem Verbinden von Dachquerholm und Dachpaneel sowie dem Anschließen der elektrischen, pneumatischen oder hydraulischen Funktionseinrichtung mit Kunststoff zu füllen, ist erfindungsmäßig vorgesehen, dass der Dachquerholm mit der integrierten Funktionseinrichtung mit Kunststoff gefüllt wird, bevor der Dachquerholm montiert wird. Dies ist besonders einfach, weil der Dachquerholm einfach mit extrudiertem und/oder geschäumtem Kunststoff gefüllt werden kann und nach dem fertigen Aushärten des Kunststoffs einfach mit dem Dachpaneel verbunden werden kann. Dies gilt in besonderem Maße, da zuvor auch die Kernlage des Dachpaneels durch extrudierten und/oder geschäumten Kunststoff gebildet werden kann. Auf diese Weise ist es aber nicht ohne Weiteres möglich die Funktionseinrichtung an ein Leitungsnetz des Kofferaufbaus anzuschließen. Die Funktionseinrichtung und/oder das Leitungsnetz sind dann nicht mehr ohne Weiteres zugänglich.

Der Kunststoff des Dachpaneels und der Kunststoff des Dachquerholms sind mithin separat voneinander und voneinander getrennt. Trotzdem können der Kunststoff des Dachquerholms und der Kunststoff des Dachpaneels aneinander anliegen. Denkbar ist aber auch, das zwischen beiden Kunststoffen ein Zwischenstück im Sinne eines weiteren Bauteils vorgesehen ist. Möglicherweise bietet es sich im Falle eines fertig extrudierten und/oder geschäumten Kunststoffs des Dachpaneels und eines fertig extrudierten und/oder geschäumten Kunststoffs des Dachquerholms an, einen nach der Montage von Dachpaneel und Dachquerholm verbleibenden Toleranzspalt mit einem Kunststoff auszuschäumen oder auszufüllen. So können drei unterschiedliche Abschnitte aus Kunststoff vorgesehen sein.

Bei der Funktionseinrichtung kann es sich um eine elektrische, eine pneumatische oder hydraulische Funktionseinrichtung handeln, die mithin elektrisch, pneumatisch oder hydraulisch betrieben wird. Es ist aber auch denkbar, dass in einem Dachquerholm mehrere Funktionseinrichtungen vorgesehen sind, die nicht alle elektrisch, pneumatisch oder hydraulisch ausgebildet sein müssen. Es ist vielmehr je nach Anwendungsfall möglich, wenn elektrische, pneumatische und/oder hydraulische Funktionseinrichtungen gleichzeitig in einem Dachquerholm kombiniert werden. Es versteht sich, dass im Falle von elektrischen Funktionseinrichtungen elektrische Anschlussleitungen zum Betrieb der Funktionseinrichtungen erforderlich sind, während der Betrieb von pneumatischen oder hydraulischen Funktionseinrichtungen eine Anbindung an eine Pneumatik- oder Hydraulikleitung erfordern. Alle diese Leitungen sollen Anschlussleitungen sein können. Entsprechende Anschlussleitungen sind dem Fachmann zudem grundsätzlich aus dem Stand der Technik bekannt.

Die Erfindung sieht jedoch vor, dass die wenigstens eine Funktionseinrichtung zunächst wenigstens teilweise in den Dachquerholm eingebracht und dort montiert wird. Die Funktionseinrichtung kann dabei bedarfsweise gegenüber dem Innenraum des Dachquerholms überstehen, was insbesondere im Falle von Funktionseinrichtungen in Form von Rückleuchten oder Blinkern zweckmäßig sein kann. Diese stehen dabei vorzugsweise nach hinten vor. Denkbar ist es aber auch, dass die Funktionseinrichtungen nach vorne in Richtung des Dachpaneels vorstehen. Der vorstehende Abschnitt kann dann von dem Dachpaneel aufgenommen werden, und zwar an einer Stelle, an der kein Kunststoff in der Kernlage vorgesehen ist. Nach dem Einbringen der Funktionseinrichtung in den Dachquerholm verbleibt im Innenraum des Dachquerholms noch ein restliches freies Volumen, das teilweise, vorzugsweise wenigstens im Wesentlichen komplett durch einen extrudierten und/oder geschäumten Kunststoff gefüllt werden kann. Die Wärmeleitung des Dachquerholms ist damit deutlich reduziert, um den Laderaum thermisch zu isolieren. Unabhängig von dem Dachquerholm wird das Dachpaneel hergestellt, indem zwischen der inneren Decklage und der äußeren Decklage ein extrudierter und/oder geschäumter Kunststoff eingebracht wird, der dann wenigstens im Wesentlichen die Kernlage des Dachpaneels bildet.

Wenn vorliegend von einem extrudierten oder geschäumten Kunststoff die Rede ist, dann wird dabei der Einfachheit halber nicht stets im Einzelnen unterschieden, ob der Kunststoff bereits geschäumt oder ausgehärtet ist oder nicht. Der Kunststoff kann durch Extrusion, also als sogenanntes Extrudat, in den Dachquerholm oder das Dachpaneel eingebracht werden und dann in der Kernlage aushärten, wobei der Kunststoff dann einen Volumenanteil an Gas umfassen kann, um eine sehr geringe Wärmeleitung bereitstellen zu können. Das Gas kann zusammen mit dem Kunststoff eingebracht werden oder erst nach dem Extrudieren gebildet werden. Dies gilt insbesondere für geschäumte Kunststoffe, die als Mischung verschiedener Komponenten in die Kernlage und/oder den Dachquerholm eingebracht werden können, um dort miteinander unter Bildung von Gas zu reagieren, das dann in Form von kleinen Bläschen im Kunststoff aufgenommen wird. Der Kunststoff bildet hinterher eine schaumartige Struktur mit einer geschlossenen Porosität enthaltend das gebildete Gas. Entsprechende durch Extrusion und/oder Schäumen gebildete Kunststoffe sind dem Fachmann aus dem Stand der Technik grundsätzlich bekannt.

Wenn der Kunststoff im Innenraum des Dachquerholms und der Kunststoff in der Kernlage des Dachpaneels wenigstens im Wesentlichen ausgehärtet sind oder ausreagiert haben, können das Dachpaneel und der Dachquerholm gefügt werden. Damit bei dem Kofferaufbau die elektrische, pneumatische oder hydraulische Funktionseinrichtung ordnungsgemäß betrieben werden kann, müssen beim Fügen von dem Dachquerholm und dem Dachpaneel miteinander die Anschlussleitung der Funktionseinrichtung mit einer Anschlussleitung des übrigen Kofferaufbaus verbunden werden. Dies stellt zwar einen zusätzlichen Arbeitsaufwand dar, der eingespart werden könnte, wenn der Dachquerholm noch nicht ausgeschäumt und ohne die Funktionseinrichtung mit dem Dachpaneel verbunden werden würde, insgesamt kann dieses Vorgehen allerdings zu einem einfacheren und kostengünstigeren Fertigen des Kofferaufbaus führen.

Zum Verbinden der Funktionseinrichtung mit einer Anschlussleitung des Kofferaufbaus, die beispielsweise in das Dachpaneel integriert oder im Laderaum verlegt sein kann, bieten sich insbesondere sogenannte Steckverbindungen an, die an sich in unterschiedlichen Ausgestaltungen aus dem Stand der Technik bekannt sind. Typischerweise umfassen diese Steckverbindungen einen Stecker und eine Buchse. Eine eindeutige Unterscheidung von Stecker und Buchse ist bei einigen Steckverbindungen aber nicht ohne Weiteres möglich. Es wird daher vorliegend stattdessen von einem Steckverbindungselement gesprochen, das nicht auf einen Stecker oder eine Buchse festgelegt ist. Steckverbindungselemente sind dabei insbesondere solche, die mit korrespondierenden Steckverbindungselementen verbunden werden können, um eine elektrische, pneumatische oder hydraulische Leitung zu schließen oder zu verbinden.

Bei einer ersten besonderen Ausgestaltung des Kofferaufbaus weist folglich die wenigstens eine Funktionseinrichtung wenigstens eine Anschlussleitung mit wenigstens einem endständigen Steckverbindungselement auf. Dies vereinfacht das Anschließen der Anschlussleitung an eine weiterführende Anschlussleitung des übrigen Kofferaufbaus. Typischerweise verlaufen die Anschlussleitungen des übrigen Kofferaufbaus zur Stirnseite des Kofferaufbaus, weil die Versorgung der Leitung durch das Zugfahrzeug oder bedarfsweise durch eine an der Stirnwand vorgesehene Transportkältemaschine erfolgt. Die Anschlussleitung des übrigen Teils des Kofferaufbaus muss also regelmäßig über eine erhebliche Strecke bis zum Dachquerholm verlegt werden. Je nach dem Anwendungsfall kann die Anschlussleitung bis zum Dachquerholm offen oder innerhalb eines Paneels, wie das Seitenwandpaneel oder das Dachpaneel, oder innerhalb eines zusätzlichen Kanals verlegt sein.

Alternativ oder zusätzlich ist es zweckmäßig, wenn das Steckverbindungselement gegenüber dem extrudierten und/oder geschäumten Kunststoff vorsteht. In einem solchen Fall kann die Anschlussleitung des Dachquerholms mit einer anderen Anschlussleitung des Kofferaufbaus einfach verbunden werden, nachdem der Dachquerholm mit dem Dachpaneel gefügt worden ist. Dementsprechend und weil die Anschlussleitung des Kofferaufbaus in vielen Fällen im oder am Dachpaneel entlang geführt sein wird, kann es in besonderem Maße bevorzugt sein, wenn das Steckverbindungselement des Dachquerholms in Richtung des Dachpaneels gegenüber dem Dachquerholm vorsteht.

Die Verbindung von Anschlussleitungen des Kofferaufbaus, wobei eine Anschlussleitung mit der Funktionseinrichtung im Dachquerholm verbunden ist, kann vereinfacht werden, wenn wenigstens ein endständiges Steckverbindungselement in einem Verteilerkasten des Dachquerholms angeordnet ist. Dies bedeutet, dass an einem Ende der Anschlussleitung des Dachquerholms ein Steckverbindungselement vorgesehen ist, das in dem Verteilerkasten angeordnet ist. Die Anschlussleitung ist zu diesem Zweck in den Verteilerkasten verlegt. Der Verteilerkasten stellt dazu vorzugsweise eine geeignete Öffnung bereit. In dem Verteilerkasten kann dann einfach eine Verbindung des Steckelements mit einem anderen Steckelement hergestellt werden, um die Funktionseinrichtung an die restliche Leitung des Kofferaufbaus anzuschließen. Zu diesem Zweck bietet es sich alternativ oder zusätzlich an, wenn der Verteilerkasten frei ist von dem extrudierten und/oder geschäumten Kunststoff des Dachquerholms. Wenn der Verteilerkasten bereits montiert werden soll, bevor der Kunststoff in den Dachquerholm eingebracht wird, bietet es sich weiter an, wenn der Verteilerkasten vor dem Einbringen des Kunststoffs soweit geschlossen ist, dass der später in den Dachquerholm eingebrachte Kunststoff nicht oder nur bedingt in den Verteilerkasten eindringen kann.

Die Steckverbindungselemente müssen im Verteilerkasten prinzipiell nur dann zugänglich sein, wenn die Steckverbindungselemente miteinander verbunden werden sollen. Daher bietet es sich an, wenn der Verteilerkasten einen Deckel aufweist, der von einer den Zugang zum wenigstens einen Steckverbindungselement freigebenden geöffneten Stellung in eine den Zugang zum wenigstens einen Steckverbindungselement verhindernde geschlossene Stellung verstellbar ausgebildet ist. Dabei ist das Verbinden von Steckverbindungselementen zudem regelmäßig dann besonders zweckmäßig durchzuführen, wenn der Deckel an den Laderaum des Kofferaufbaus angrenzt. Dann ist der Deckel leicht aus dem Laderaum heraus zu öffnen und/oder zu schließen.

Um wenigstens eine Anschlussleitung in den Verteilerkasten verlegen zu können, bietet es sich an, wenn der Verteilerkasten wenigstens eine Aussparung und/oder Öffnung zum Durchführen von Anschlussleitungen aufweist. Die wenigstens eine Aussparung und/oder Öffnung zum Durchführen kann der Einfachheit halber in dem Deckel vorgesehen sein. So ist es beispielsweise einfach möglich, die Anschlussleitungen bei geöffnetem Deckel in den Verteilerkasten einzuführen und den Deckel hinterher zu schließen. Dies ist infolge der Öffnungen oder Aussparungen trotz der verlegten Anschlussleitungen möglich. Dabei hat es sich hinsichtlich der Fertigung des Kofferaufbaus in vielen Fällen bewährt, wenn sich eine Anschlussleitung aus dem Laderaum durch eine Aussparung und/oder Öffnung in den Verteilerkasten erstreckt. Dies gilt besonders dann, wenn die Aussparung und/oder Öffnung im Deckel vorgesehen ist und/oder die Anschlussleitung aus dem Laderaum in den Verteilerkasten verlegt werden soll.

Um in einfacher Weise eine im Dachpaneel verlegte Anschlussleitung mit der Anschlussleitung der Funktionseinrichtung im Dachquerholm verbinden zu können, kann es sich anbieten, dass der Verteilerkasten wenigstens eine in Richtung des Dachpaneels weisende Öffnung zum Durchführen einer Anschlussleitung aus dem Dachpaneel in den Verteilerkasten aufweist. Das Verbinden wird dann zusätzlich vereinfacht, wenn in dem Verteilerkasten wenigstens ein Steckverbindungselement der Anschlussleitung des Dachpaneels vorgesehen ist. Dieses Steckverbindungselement kann dann mit einem Steckverbindungselement der Anschlussleitung der Funktionseinrichtung im Verteilerkasten verbunden werden.

Es kann aber auch eine Anschlussleitung im Laderaum verlegt werden, die sich dann der Einfachheit halber durch eine Aussparung oder Öffnung des Deckels in den Verteilerkasten erstrecken kann. Auch in diesem Falle wird das Verbinden der Anschlussleitungen des Laderaums und des Dachquerholms vereinfacht, wenn beide Anschlussleitungen in dem Verteilerkasten ein Steckverbindungselement aufweisen. Die Steckverbindungselemente sind dann vorzugsweise korrespondierend ausgebildet.

Die Anschlussleitung des Laderaums kann zweckmäßig wenigstens abschnittsweise in einem dem Dachpaneel und/oder einem Seitenwandpaneel zugeordneten Laderaumkanal vorgesehen werden. So wird vermieden, dass die Anschlussleitung im Laderaum versehentlich beschädigt wird. Um das Be- und Entladen des Laderaums nicht unnötig zu beeinträchtigen kann der Laderaumkanal in einem Kantenbereich zwischen dem Dachpaneel und einem Seitenwandpaneel im Laderaum angeordnet sein. Dies hat den zusätzlichen Vorteil, dass zur Verdingung mit der Anschlussleitung der Funktionseinrichtung keine übermäßigen Leitungslängen bereitgestellt werden müssen.

Die erfindungsgemäßen Vorteile können insbesondere dann zweckmäßig genutzt werden, wenn die wenigstens eine Funktionseinrichtung ein Fahrlicht, ein Rückfahrlicht, ein Blinklicht, ein Türkontaktschalter, ein Türverschlusssensor, ein Türverschlusssystem, eine Rückfahrkamera, ein Abstandssensor, eine Überwachungseinrichtung für den rückwärtigen Verkehr, eine IR-Kamera und/oder ein Display ist. Derartige Funktionseinrichtungen bieten sich für die Ausrüstung von Dachquerholmen an und können zweckmäßig genutzt werden, wenn sie erfindungsgemäß einfach angeschlossen werden können.

Unabhängig davon ist die Ausstattung von Dachquerholmen insbesondere bei Kühlkofferaufbauten mit einem besonderen Aufwand verbunden. Daher werden die erfindungsgemäßen Vorteile in besonderem Maße im Zusammenhang mit Kühlkofferaufbauten erzielt. Bei diesen ist typischerweise eine feste Bodenstruktur vorgesehen, wobei die Bodenstruktur ein Bodenpaneel umfassend eine einen Ladeboden bereitstellende Oberbodenlage, eine Unterbodenlage zum Aufsetzen auf ein Chassis oder Fahrwerk des Nutzfahrzeugs bereitstellt. Zwischen der Oberbodenlage und der Unterbodenlage entsprechender Bodenstrukturen kann eine Bodenlage vorgesehen sein, welche Bodenquerträger und dazwischen einen extrudierten und/oder geschäumten Kunststoff aufweist. Auf diese Weise wird die Wärmeleitung des Bodens herabgesetzt. Die Bodenstruktur kann zudem einen Bodenquerholm aufweisen, wobei die Seitenwände jeweils einen Seitenholm aufweisen können. Die Seitenholme, der Bodenquerholm und der Dachquerholm können dann so korrespondierend zueinander ausgebildet sein, dass diese beim Fertigen des Kofferaufbaus zu einem gemeinsamen Rückwandrahmen gefügt werden. Der Rückwandrahmen muss also nicht nachträglich nach dem Fügen von Seitenwänden, Dach und Bodenstruktur am Kofferaufbau angebracht werden.

Zum Verschließen des Rückwandrahmens kann wenigstens eine Rückwandtür und/oder wenigstens ein Rolltor vorgesehen sein. Die Rückwandtür oder das Rolltor lässt sich dann von einer den Rückwandrahmen verschließenden geschlossenen Stellung in eine den Rückwandrahmen zum Be- und/oder Entladen des Kofferaufbaus durch den Rückwandrahmen freigebende geöffnete Stellung verstellen. Entsprechende Ausgestaltungen der Rückwandrahmen sind im Prinzip bekannt und haben sich zudem in der Praxis bewährt.

Bei einer ersten besonders bevorzugten Ausgestaltung des Verfahrens wird vor oder nach dem Einbringen des Kunststoffs in den Innenraum des Dachquerholms der Dachquerholm mit einem Verteilerkasten ausgerüstet. Der Verteilerkasten kann bei vorzeitigem Anbringen ein Teil der Form zum Ausschäumen des Dachquerholms bilden. Bei nachträglicher Anbindung behindert er weder das Ausfüllen des Dachquerholms noch das Ausbreiten des Kunststoffs in dem Innenraum des Dachquerholms. Zudem kann vor oder während dem Ausrüsten des Dachquerholms mit dem Verteilerkasten ein Steckverbindungselement der wenigstens einen Funktionseinrichtung und/oder eine Anschlussleitung der wenigstens einen Funktionseinrichtung in den Verteilerkasten eingebracht werden. Auf diese Weise kann dann in einem nachgelagerten Verfahrensschritt eine Verbindung der Anschlussleitung des Funktionsteils des Dachquerholms mit einer Anschlussleitung eines übrigen Bereichs des Kofferaufbaus einfach und zweckmäßig verbunden werden.

Alternativ oder zusätzlich kann das Steckverbindungselement der wenigstens einen Funktionseinrichtung und/oder die Anschlussleitung der wenigstens einen Funktionseinrichtung nach dem Verbinden des Dachquerholms mit dem Dachpaneel mit einem Steckverbindungselement einer Anschlussleitung des Dachpaneels und/oder des Laderaums und/oder mit der Anschlussleitung des Dachpaneels und/oder des Laderaums verbunden werden. Es ist also nicht erforderlich, dass an den zu verbindenden Anschlussleitungen auch Steckverbindungselemente vorgesehen sind. Es wird aber das Verbinden vereinfacht, wenn nur die Steckverbindungselemente der Anschlussleitungen zusammengesteckt werden müssen.

Damit die Verbindungen der Anschlussleitungen und die Anschlussleitungen selbst vor äußeren Einwirkungen geschützt sind, kann nach dem Verbinden der Anschlussleitungen und/oder Steckverbindungselemente der Verteilerkasten mit einem Deckelelement des Verteilerkastens verschlossen werden. Nach dem Verbinden der Anschlussleitungen und/oder Steckverbindungselemente müssen diese meist nicht mehr zugänglich sein.

Im Falle einer Anschlussleitung des Laderaums kann diese wenigstens teilweise einfach und geschützt vor äußeren Einwirkungen in einen Laderaumkanal aufgenommen sein. Dabei bietet es sich an, wenn der Laderaumkanal dem Dachpaneel und/oder dem Seitenrandpaneel zugeordnet ist. Dort stört der Laderaumkanal das Be- und Entladen nur geringfügig. Dies gilt in besonderem Maße, wenn der Laderaumkanal im Kantenbereich zwischen Dachpaneel und Seitenwandpaneel verläuft. Dabei ist der Anschluss der Funktionseinrichtung bedarfsweise einfacher durchzuführen, wenn die Anschlussleitung des Laderaums erst nach der Montage des Laderaumkanals an dem Dachpaneel und/oder der Seitenwand in den Laderaumkanal eingebracht wird. Sodann oder vorab kann die Anschlussleitung des Laderaums mit der Funktionseinrichtung verbunden werden. Dabei bietet es sich wie ausgeführt an, wenn diese Verbindung in einem Verteilerkasten erfolgt, auch wenn dies nicht erforderlich ist.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Kofferaufbau in einer perspektivischen Darstellung,
- Fig. 2: eine Draufsicht auf die Rückwand des Kofferaufbaus aus Fig. 1,
- Fig. 3: ein Detail der Verbindung zwischen Dach und Seitenwand des Kofferaufbaus aus Fig. 1 in einer Schnittansicht,
- Fig. 4: ein Detail der Verbindung zwischen Bodenstruktur und Seitenwand des Kofferaufbaus aus Fig. 1 in einer teilweisen Schnittansicht,
- Fig. 5: das hintere Ende des Kofferaufbaus aus Fig. 1 in eine Schnittansicht entlang einer Schnittebene parallel zur Längserstreckung des Kofferaufbaus und
- Fig. 6A-D: ein Detail des Kofferaufbaus aus Fig. 1 im Bereich des Dachquerholms in unterschiedlichen Schnittansichten und in einer perspektivischen Darstellung.

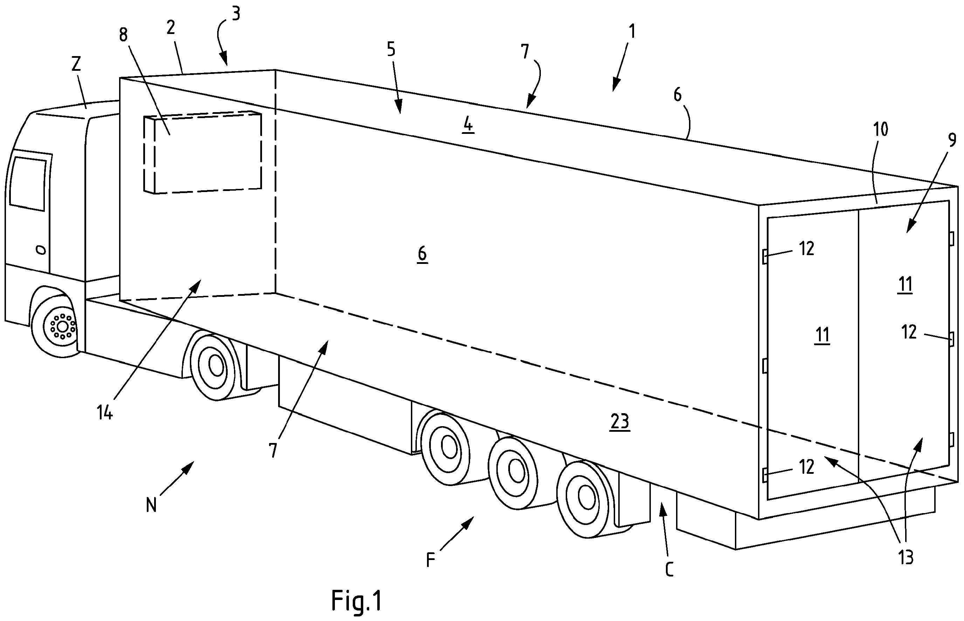

In der Fig. 1 ist ein von einem Nutzfahrzeug N in Form eines Sattelaufliegers getragener und von einer Zugmaschine Z gezogener Kofferaufbau 1 in Form eines Kühlkofferaufbaus dargestellt. Der Kofferaufbau 1 umfasst eine Stirnwand 2 aus einem Stirnwandpaneel 3, ein Dach 4 aus einem Dachpaneel 5 und Seitenwände 6 aus jeweils einem Seitenwandpaneel 7. An der Stirnwand 2 ist eine Transportkältemaschine 8 zum Kühlen des Kofferaufbaus 1 mittels Kühlluft vorgesehen. An der Rückseite des Kühlkofferaufbaus 1 ist eine Rückwand 9 mit einem Rückwandrahmen 10 vorgesehen, in dem zwei Rückwandtüren 11 über Scharniere 12 schwenkbar gehalten sind, die ebenfalls durch ein Türpaneel 13 gebildet werden. Die Rückwandtüren 11 können aus einer in dem Rückwandrahmen 10 vorgesehenen, einen Laderaum 14 des Kofferaufbaus 1 verschließenden geschlossenen Stellung in eine den Laderaum 14 für das Be- und Entladen durch den Rückwandrahmen 10 freigebende geöffnete Stellung und zurück verstellt werden.

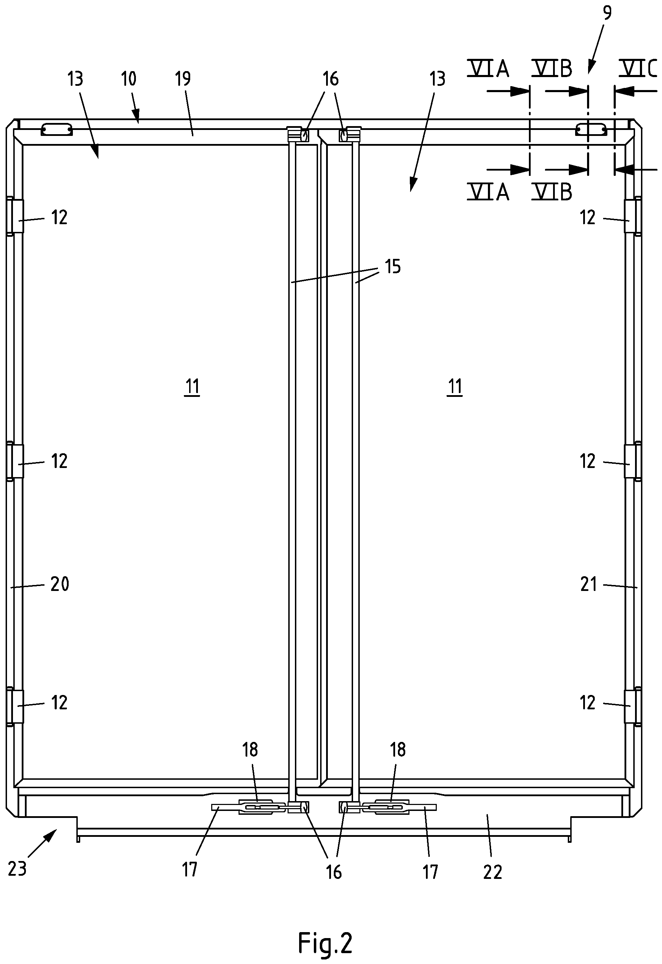

Wie insbesondere in der Fig. 2 dargestellt ist, weisen die Rückwandtüren 11 jeweils eine Verriegelungsstange 15 auf, mit der die entsprechende Rückwandtür 11 formschlüssig an korrespondierenden Schlössern 16 am oberen Rand und am unteren Rand des Rückwandrahmen 10 gehalten werden kann. Die Verriegelungsstangen 15 werden händisch mittels Handgriffen 17 bedient, die bei verriegelten Rückwandtüren 11 an Griffhalterungen 18 gehalten und/oder festgelegt werden. Die Rückwandtüren 11 können so in der geschlossenen Stellung verriegelt und gegenüber einem versehentlichen und/oder unbefugten Öffnen gesichert werden. Auch wenn in der Fig. 2 jeder Rückwandtür 11 eine einzige Verriegelungsstange 15 zugeordnet ist, könnten grundsätzlich auch mehrere Verriegelungsstangen 15 einer Rückwandtür 11 zugeordnet sein. Dies ist jedoch mit einem zusätzlichen konstruktiven Aufwand verbunden. Der Rückwandrahmen 10 des Kofferaufbaus 1 ist mehrteilig aus einem Dachquerholm 19, Seitenholmen 20,21 und einem Bodenquerholm 22 gebildet. Dabei wird der Dachquerholm 19 vom Dach 4, die Seitenholme 20,21 von den Seitenwänden 6 und der Bodenquerholm 22 von einer Bodenstruktur 23 bereitgestellt. Die Bodenstruktur sitzt auf einem Chassis C auf, das das zudem das Fahrwerk F des Nutzfahrzeugs N trägt.

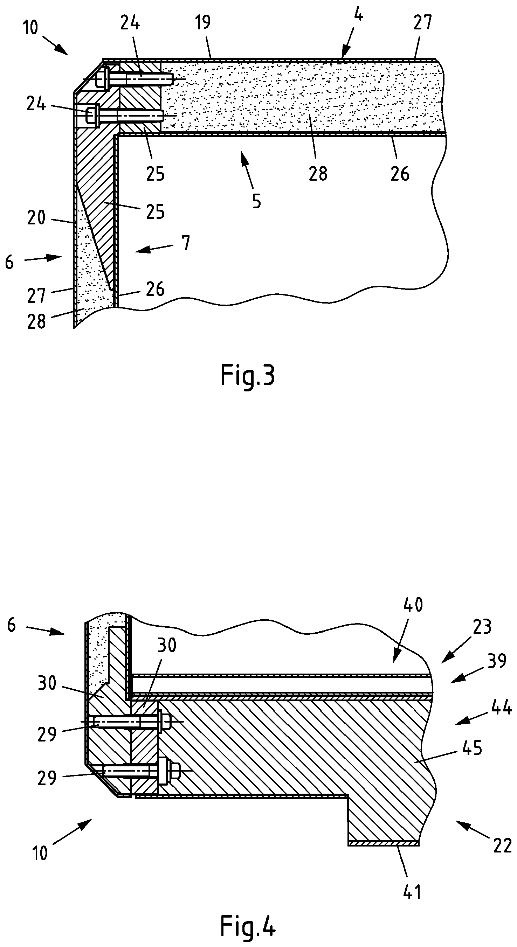

In der Fig. 3 ist ein Detail des Rückwandrahmens 10 im Bereich der Verbindung zwischen dem Dach 4 und einer Seitenwand 6 dargestellt. Der Dachquerholm 19 des Dachs 4 und der Seitenholm 20 der Seitenwand 6 sind in dem gemeinsamen Eckbereich über Schrauben 24 miteinander verschraubt, die in Verbindungselemente 25 von Dach 4 und Seitenwand 6 eingreifen. Die Verbindung zwischen dem Dachquerholm 19 des Dachs 4 und dem Seitenholm 21 der anderen Seitenwand 6 ist analog ausgebildet.

Die Seitenwandpaneele 7 der Seitenwände 6 und das Dachpaneel 5 des Dachs 4 weisen jeweils zum Laderaum 14 weisende strukturgebende innere Decklagen 26 und zur Umgebung des Kofferaufbaus 1 weisende strukturgebende äußere Decklagen 27 auf, zwischen denen eine Kernlage 28 aus einem geschäumten und/oder extrudierten Kunststoff vorgesehen ist.

In der Fig. 4 ist ein Detail des Rückwandrahmens 10 im Bereich der Verbindung zwischen der Bodenstruktur 23 und einer Seitenwand 6 dargestellt. Der Bodenquerholm 22 der Bodenstruktur 23 und der Seitenholm 20 der Seitenwand 6 sind in dem gemeinsamen Eckbereich über Schrauben 29, die in Verbindungselemente 30 von Seitenwand 6 und Bodenstruktur 23 eingreifen, miteinander verschraubt. Die Verbindung zwischen dem Bodenquerholm 22 und dem Seitenholm 21 der anderen Seitenwand 6 ist analog ausgebildet.

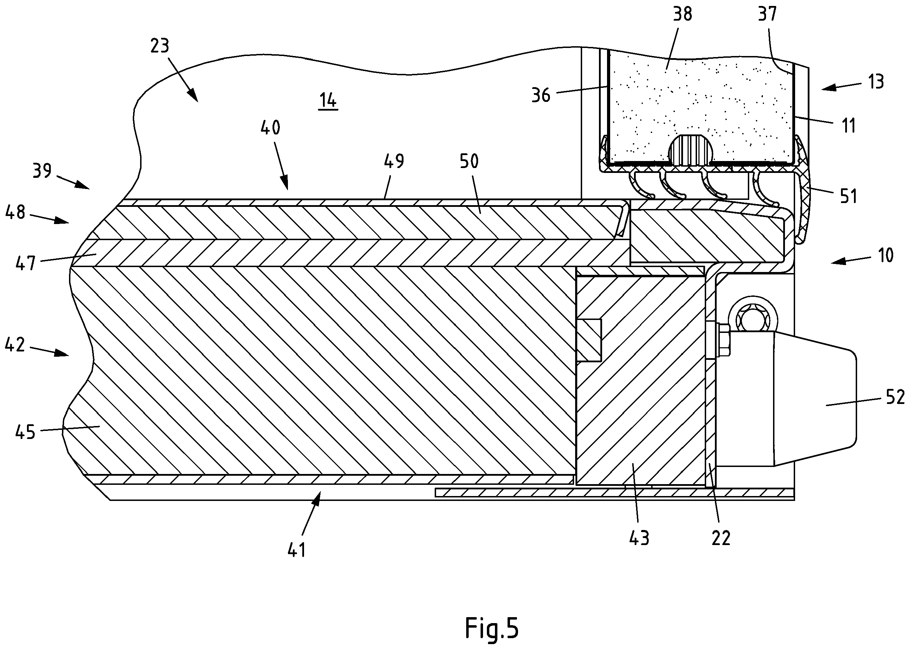

In der Fig. 5 ist das hintere Ende des Nutzfahrzeugs N in einem Längsschnitt dargestellt. Die den Rückwandrahmen 10 verschließenden Türpaneele 13 weisen jeweils strukturgebende innere Decklagen 36, die zum Laderaum 14 hinweisen und strukturgebende äußere Decklagen 37, die von dem Laderaum 14 wegweisen, auf. Zwischen den inneren Decklagen 36 und den äußeren Decklagen 37, die jeweils mehrlagig ausgebildet sein und eine Schicht aus einem Metall oder einem faserverstärkten Kunststoff aufweisen können, ist eine Kernlage 38 aus einem geschäumten und/oder extrudierten Kunststoff vorgesehen.

Das Bodenpaneel 39 der Bodenstruktur 23 wird dagegen durch eine Oberbodenlage 40 und eine Unterbodenlage 41 gebildet, die über eine Bodenlage 42 voneinander beabstandet sind. Die Bodenlage 42 wird dabei wenigstens im Wesentlichen aus einer Mehrzahl von Bodenquerträgern 43, Hilfsquerträgern 44 und einem jeweils dazwischen vorgesehenen geschäumten und/oder extrudierten Kunststoff 45 gebildet. Bei dem Kunststoff 45 kann es sich bedarfsweise um eine Mischung aus Kunststoffen oder unterschiedlichen, miteinander verbundenen Kunststoffen handeln. Die Bodenquerträger 43 sind aus Holz gebildet und sind im Vergleich zu den Hilfsquerträgern 44 deutlich breiter ausgebildet. Die Hilfsquerträger 44 können ebenfalls aus Holz gebildet sein. Die Hilfsquerträger 44 weisen bei dem dargestellten und insoweit bevorzugten Kofferaufbau Öffnungen 46 auf, so dass die Zwischenräume zwischen den Hilfsquerträgern 44 und den Bodenquerträgern 43 einfacher mit einem zu schäumenden Kunststoff 45 ausgeschäumt werden können. Der Kunststoff 45 kann dann in die entsprechenden Zwischenräume einströmen und dort jeweils fertig ausschäumen und aushärten. Bei der Unterbodenlage 41 handelt es sich bei dem dargestellten und insoweit bevorzugten Kofferaufbau 1 um eine Blechlage aus Stahl. Die Oberbodenlage 40 ist bei dem dargestellten und insoweit bevorzugten Kofferaufbau 1 mehrlagig ausgebildet. Es sind eine Traglage 47 aus Holz und ein mit der Traglage 47 verklebter Ladeboden 48 vorgesehen, wobei der Ladeboden 48 wiederum zweilagig ausgebildet ist. Die Oberseite des Ladebodens 48, auf dem die Ladung abgestellt werden kann, ist aus einer Metalllage 49 gebildet, die aus Aluminium gefertigt sein kann, welche fest mit einer Stützlage 50 aus Holz verbunden ist.

Zwischen der Bodenstruktur 23 und der Rückwandtür 11 in der geschlossenen Stellung ist ein Dichtungselement 51 vorgesehen, das einen konvektiven Wärmetransport an den Rückwandtüren 11 vorbei in den Laderaum 14 hinein vermeidet. Gegenüber den Rückwandtüren 11 stehen Rammpufferelemente 52 des Bodenquerholms 22 nach hinten in Richtung eines möglichen Hindernisses vor. Der Bodenquerholm 22 ist bei dem dargestellten und insoweit bevorzugten Kofferaufbau 1 mehrteilig ausgebildet.

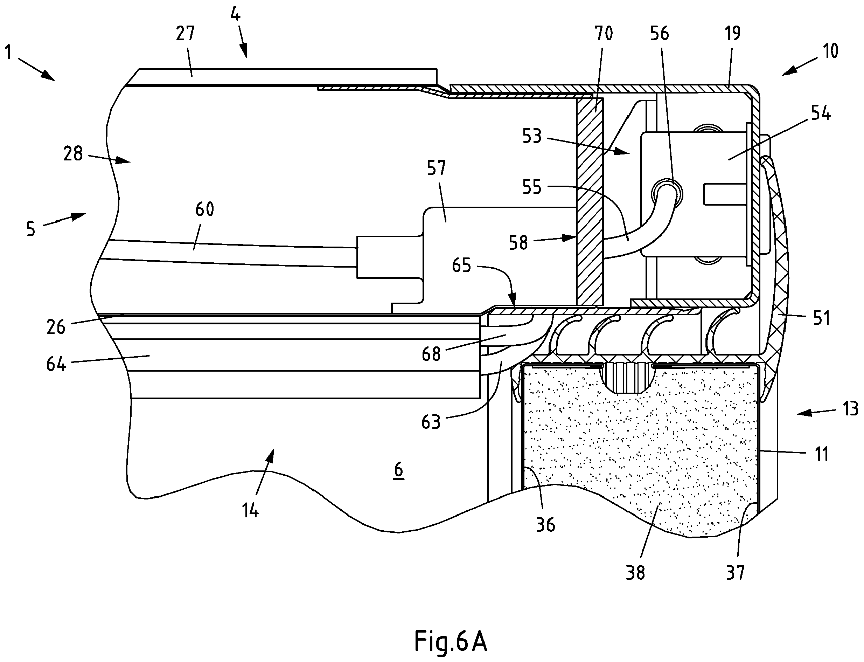

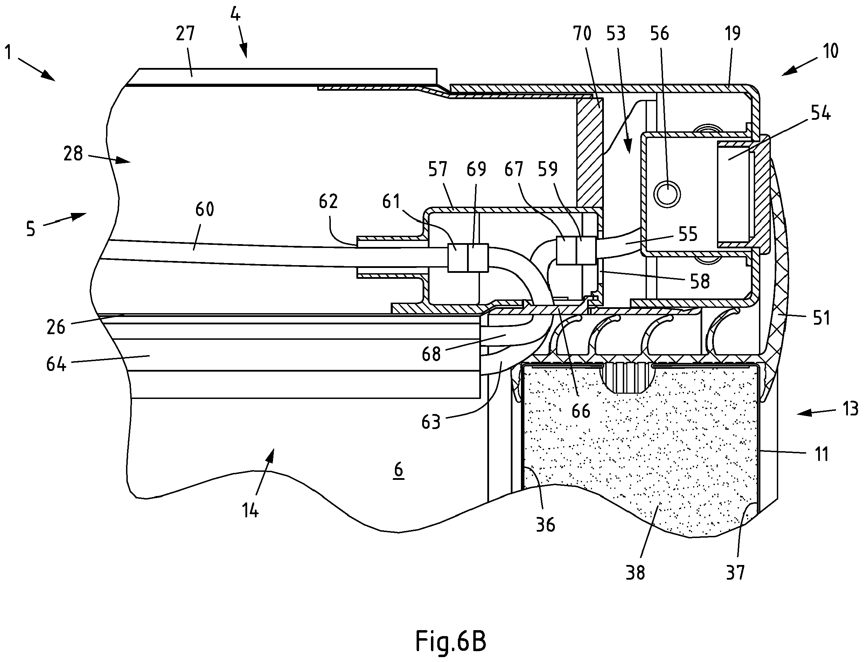

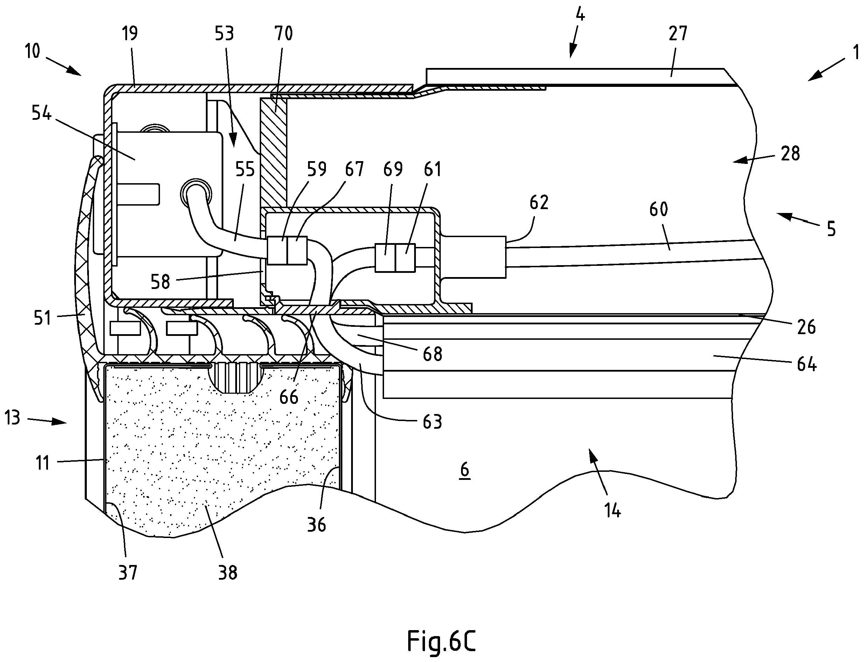

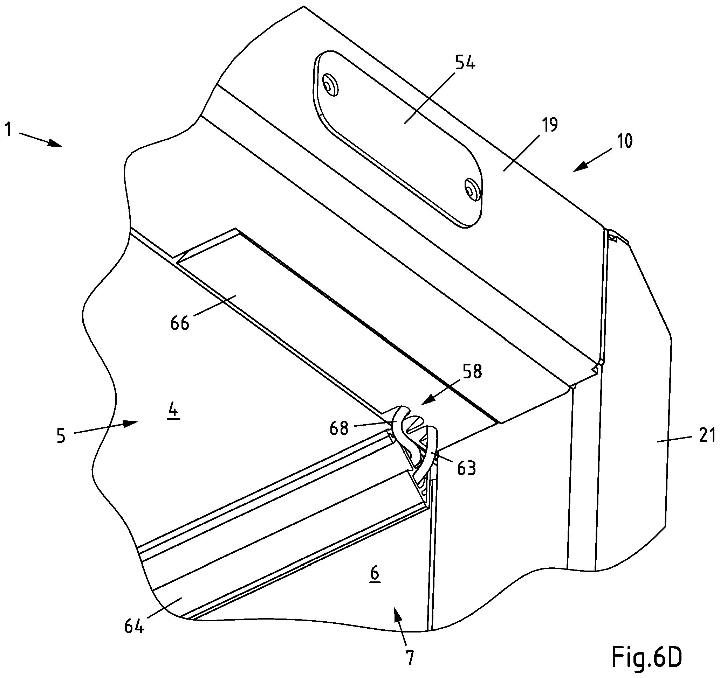

In den Fig. 6A-D ist der Kofferaufbau 1 im Bereich des Dachquerholms 19 in unterschiedlichen Schnittansichten (Fig. 6A-C) und in einer perspektivischen Darstellung (Fig. 6D) dargestellt. Bei den Darstellungen sind der Kunststoff in der Kernlage 28 und der Kunststoff im Innenraum 53 des Dachquerholms 19 der besseren Anschaulichkeit halber weggelassen worden. Der Kunststoff der Kernlage 28 des Dachpaneels 5 und der Kunststoff des Dachquerholms 19 sind voneinander abgegrenzt und gehen nicht unmittelbar ineinander über, da der Kunststoff der Kernlage 28 und der Kunststoff des Dachquerholms 19 vor dem Verbinden von Dachpaneel 5 und Dachquerholm 19 in den entsprechenden Hohlräumen vorgesehen und darin ausgehärtet worden sind. Erst nach dem Aushärten oder Ausreagieren der Kunststoffe ist die Verbindung des Dachquerholms 19 mit dem Dachpaneel 5 erfolgt. Der Kunststoff der Kernlage 28 des Dachpaneels 5 und der Kunststoff des Dachquerholms 19 können wenigstens abschnittsweise durch ein zwischeneinander angeordnetes separates Bauteil 70, bedarfsweise ein Bauteil ebenfalls aus Kunststoff und/oder ein nach dem Verbinden von Dachpaneel 5 und Dachquerholm 19 in einen verbleibenden Toleranzspalt eingebrachtes Bauteil, voneinander getrennt sein. Erforderlich ist dieses wenigstens bereichsweise vorgesehene Bauteil 70 aber nicht.

Vor dem Einbringen des Kunststoffs in den Dachquerholm 19 ist in dem Innenraum 53 des Dachquerholms 19 eine Funktionseinrichtung 54 vorgesehen worden, die am hinteren Ende der Funktionseinrichtung 54 durch den Dachquerholm 19 hindurchgreift und nach hinten gegenüber dem Dachquerholm 19 vorsteht. Die Funktionseinrichtung 54 weist eine Anschlussleitung 55 auf, die aus einer Öffnung 56 im Gehäuse der Funktionseinrichtung 53 in den vom Kunststoff ausgefüllten Innenraum 53 des Dachquerholms 19 geführt ist. Der Kunststoff füllt bei dem dargestellten und insoweit bevorzugten Kofferaufbau 1 wenigstens im Wesentlichen den freien Innenraum 53 des Dachquerholms 19 aus. Die Anschlussleitung 55 erstreckt sich mithin durch den Kunststoff des Dachquerholms 19 und verläuft hinein in einen Verteilerkasten 57, der zur Aufnahme der Anschlussleitung 55 eine geeignete Aussparung 58 bereitstellt. Der Verteilerkasten 57 erstreckt sich bei dem dargestellten und insoweit bevorzugten Kofferaufbau 1 bis hinein in das Dachpaneel 5. Im Verteilerkasten 57 endet die Anschlussleitung 55 der Funktionseinrichtung 54 mit einem endständigen Steckverbindungselement 59. Die dargestellte und insoweit bevorzugte Funktionseinrichtung 54 weist noch eine Vorbereitung für eine Aussparung 58 auf, durch die bedarfsweise eine weitere Anschlussleitung oder eine alternative Anschlussleitung geführt sein könnte. Die Anschlussleitung würde sich dann vorzugsweise auch durch den Kunststoff des Dachquerholms 19 bis hinein in den Verteilerkasten 57 erstrecken. In dem Verteilerkasten 57 könnte die entsprechende Anschlussleitung dann ebenfalls mit einem endständigen Steckverbindungselement enden.

In dem Dachpaneel 5 ist bei dem dargestellten und insoweit bevorzugten Kofferaufbau 1 eine weitere Anschlussleitung 60 des Dachpaneels 5 verlegt, die im Dachpaneel 5 überwiegend in dem Kunststoff der Kernlage 28 verlegt ist. Das Ende der Anschlussleitung 60 des Dachpaneels 5 endet in dem Verteilerkasten 57 und in einem Steckverbindungselement 61. Um die Anschlussleitung 60 in den Verteilerkasten 57 einführen zu können, weist der Verteilerkasten 57 eine Öffnung 62 zum Durchführen der Anschlussleitung 60 auf. Zudem ist eine Anschlussleitung 63 des Laderaums 14 im Laderaum 14 verlegt, Die Anschlussleitung 63 des Laderaums 14 ist dabei wenigstens überwiegend in einem Laderaumkanal 64 geführt, der in dem Kantenbereich zwischen dem Dach 4 und der Seitenwand 6 montiert ist. An dem hinteren Ende des Laderaumkanals 64 tritt die Anschlussleitung 63 des Laderaums aus 14 dem Laderaumkanal 64 aus und durch eine Aussparung 58 in einem Deckel 66 des Verteilerkastens 57 in den Verteilerkasten 57 ein. In dem Verteilerkasten 57 endet die Anschlussleitung 63 des Laderaums 14 mit einem endständigen Steckverbindungselement 67. Der Deckel 66 des Verteilerkastens 57 ist dem Laderaum 14 zugeordnet und von dem Laderaum 14 zugänglich, um den Deckel 66 von dem Verteilerkasten 57 abzunehmen oder in eine offene Stellung zu verstellen. Nach dem Einführen der Anschlussleitung 63 des Laderaums 14 und dem Verbinden des Steckverbindungselements 67 der Anschlussleitung 63 des Laderaums 14 mit dem Steckverbindungselement 61 der Anschlussleitung 55 des Dachquerholms 19 kann der Deckel 66 wieder auf den Verteilerkasten 57 aufgesetzt werden oder in die geschlossene Stellung verstellt werden. Die geschlossene Stellung des Deckels 66 ist in den Fig. 6A-D dargestellt.

In dem Laderaumkanal 64 ist bei dem dargestellten und insoweit bevorzugten Kofferaufbau 1 noch eine weitere Anschlussleitung 68 des Laderaums 14 verlegt. Die Anschlussleitung 68 ist ebenfalls durch eine Aussparung 58 im Deckel 66 des Verteilerkastens 57 in den Verteilerkasten 57 eingeführt und dort mit dem endständigen Steckverbindungselement 69 mit dem Steckverbindungselement 61 der Anschlussleitung 55 des Dachpaneels 5 verbunden.

Die dargestellten und beschriebenen Verbindungen stellen jedoch nur beispielhafte Verbindungen dar. Es kann beispielsweise auf Verbindungsleitungen im Dachpaneel oder im Laderaum verzichtete werden. Es kann auch vorgesehen sein, dass eine Funktionseinrichtung mit einer Anschlussleitung des Laderaums und eine andere Funktionseinrichtung mit einer Anschlussleitung des Dachpaneels verbunden sind. Es können aber auch mehrere Funktionseinrichtungen mit mehreren Anschlussleitungen des Dachpaneels oder des Laderaums verbunden sein. Es können auch mehrere Funktionseinrichtungen mit einer gemeinsamen Anschlussleitung verbunden sein. Im Übrigen ist es auch nicht erforderlich die jeweiligen Anschlussleitungen mittels Steckverbindungselementen zu verbinden. Die Anschlussleitungen können auch direkt verbunden werden. Je nach Anwendungsfall können auch jeweils alternativ oder in Ergänzung elektrische, pneumatische oder hydraulische Funktionseinrichtungen vorgesehen sein. Die Anschlussleitungen zum Anschließen der Funktionseinrichtungen sind dann ebenfalls elektrisch, pneumatisch oder hydraulisch.

### Bezugszeichenliste

- 1: Kofferaufbau
- 2: Stirnwand
- 3: Stirnwandpaneel
- 4: Dach
- 5: Dachpaneel
- 6: Seitenwand
- 7: Seitenwandpaneel
- 8: Transportkältemaschine
- 9: Rückwand
- 10: Rückwandrahmen
- 11: Rückwandtür
- 12: Scharnier
- 13: Rückwandpaneel
- 14: Laderaum
- 15: Verriegelungsstange
- 16: Schloss
- 17: Handgriff
- 18: Griffhalterung
- 19: Dachquerholm
- 20-21: Seitenholm
- 22: Bodenquerholm
- 23: Bodenstruktur
- 24: Schraube
- 25: Verbindungselement
- 26: innere Decklage
- 27: äußere Decklage
- 28: Kernlage
- 29: Schraube
- 30: Verbindungselement
- 36: innere Decklage
- 37: äußere Decklage
- 38: Kernlage
- 39: Bodenpaneel
- 40: Oberbodenlage
- 41: Unterbodenlage
- 42: Bodenlage
- 43: Bodenquerträger
- 44: Hilfsquerträger
- 45: Kunststoff
- 46: Öffnung
- 47: Traglage
- 48: Ladeboden
- 49: Metalllage
- 50: Stützlage
- 51: Dichtungselement
- 52: Rammpufferelement
- 53: Innenraum
- 54: Funktionseinrichtung
- 55: Anschlussleitung
- 56: Öffnung
- 57: Verteilerkasten
- 58: Aussparung
- 59: Steckverbindungselement
- 60: Anschlussleitung
- 61: Steckverbindungselement
- 62: Öffnung
- 63: Anschlussleitung
- 64: Laderaumkanal
- 66: Deckel
- 67: Steckverbindungselement
- 68: Anschlussleitung
- 69: Steckverbindungselement
- C: Chassis
- F: Fahrwerk
- N: Nutzfahrzeug
- Z: Zugfahrzeug

## Patentansprüche

1. Kofferaufbau (1) eines Nutzfahrzeugs (N), insbesondere Lastkraftwagen, Anhänger oder Sattelauflieger, mit festen, jeweils ein Seitenwandpaneel (7) umfassenden Seitenwänden (6) und einem festen, ein Dachpaneel (5) umfassenden Dach (4), wobei die Seitenwandpaneele (7) und das Dachpaneel (5) eine strukturgebende, einem Laderaum (14) des Kofferaufbaus (1) zugeordnete innere Decklage (26), eine strukturgebende, der Umgebung des Kofferaufbaus (1) zugeordnete äußere Decklage (27) und eine zwischen der inneren Decklage (26) und der äußeren Decklage (27) angeordnete Kernlage (28) aus einem extrudierten und/oder geschäumten Kunststoff aufweisen, wobei das Dach (4) einen den hinteren Abschluss des Dachs (4) bildenden, sich wenigstens im Wesentlichen über die gesamte Breite des Dachpaneels (5) erstreckenden und mit dem Dachpaneel (5) verbundenen Dachquerholm (19) aufweist, wobei in einem Innenraum (53) des Dachquerholms (19) wenigstens teilweise eine elektrische, pneumatische oder hydraulische Funktionseinrichtung (55) und ein extrudierter und/oder geschäumter Kunststoff zur thermischen Isolierung des Dachquerholms (19) angeordnet sind,
**dadurch gekennzeichnet, dass**
der Dachquerholm (19) umfassend den fertig extrudierten und/oder geschäumten Kunststoff mit dem Dachpaneel (5) umfassend den fertig extrudierten und/oder geschäumten Kunststoff der Kernlage (28) verbunden worden ist.

2. Kofferaufbau nach Anspruch 1,
**dadurch gekennzeichnet, dass**
die wenigstens eine Funktionseinrichtung (54) wenigstens eine elektrische, pneumatische oder hydraulische Anschlussleitung (55) mit wenigstens einem endständigen Steckverbindungselement (59) aufweist und dass das Steckverbindungselement (59) gegenüber dem extrudierten und/oder geschäumten Kunststoff, insbesondere in Richtung des Dachpaneels (5), vorsteht.

3. Kofferaufbau nach Anspruch 2,
**dadurch gekennzeichnet, dass**
wenigstens ein endständiges Steckverbindungselement (59,61,67,69) in einem Verteilerkasten (57) des Dachquerholms (19) angeordnet ist und/oder dass der Verteilerkasten (57) frei ist von dem extrudierten und/oder geschäumten Kunststoff des Dachquerholms (19).

4. Kofferaufbau nach Anspruch 3,
**dadurch gekennzeichnet, dass**
der Verteilerkasten (57) einen von einer den Zugang zum wenigstens einen Steckverbindungselement (67,69) freigebenden geöffneten Stellung in eine den Zugang zum wenigstens einen Steckverbindungselement (59,61,67,69) verhindernde geschlossene Stellung verstellbaren Deckel (66) aufweist und dass, vorzugsweise, der Deckel (66) an den Laderaum (14) des Kofferaufbaus (1) angrenzt.

5. Kofferaufbau nach Anspruch 3 oder 4,
**dadurch gekennzeichnet, dass**
der Verteilerkasten (57), vorzugsweise der Deckel (66) des Verteilerkastens (57), wenigstens eine Aussparung (58) und/oder Öffnung zum Durchführen von Anschlussleitungen (6368) in den Verteilerkasten (57) aufweist und dass, vorzugsweise, sich eine Anschlussleitung (63,68) aus dem Laderaum (14) durch eine Aussparung (58) und/oder Öffnung in den Verteilerkasten (57) erstreckt.

6. Kofferaufbau nach einem der Ansprüche 3 bis 5,
**dadurch gekennzeichnet, dass**
der Verteilerkasten (57) wenigstens eine in Richtung des Dachpaneels (5) weisende Öffnung (62) zum Durchführen einer Anschlussleitung (60) aus dem Dachpaneel (5) in den Verteilerkasten (57) aufweist und dass, vorzugsweise, in dem Verteilerkasten (57) wenigstens ein Steckverbindungselement (61) der Anschlussleitung (60) des Dachpaneels (5) vorgesehen ist.

7. Kofferaufbau nach einem der Ansprüche 3 bis 6,
**dadurch gekennzeichnet, dass**
sich eine Anschlussleitung (63,68) des Laderaums (14) durch eine Aussparung (58) oder Öffnung des Deckel (66) in den Verteilerkasten (57) erstreckt und dass, vorzugsweise, in dem Verteilerkasten (57) wenigstens ein Steckverbindungselement (67,69) der Anschlussleitung (63,68) des Laderaums (14) vorgesehen ist.

8. Kofferaufbau nach Anspruch 7,
**dadurch gekennzeichnet, dass**
die Anschlussleitung (63,68) wenigstens abschnittsweise in einem dem Dachpaneel (5) und/oder einem Seitenwandpaneel (7) zugeordneten Laderaumkanal (64) vorgesehen ist und dass, vorzugsweise, der Laderaumkanal (64) in einem Kantenbereich zwischen dem Dachpaneel (5) und einem Seitenwandpaneel (7) im Laderaum (14) angeordnet ist.

9. Kofferaufbau nach einem der Ansprüche 1 bis 8,
**dadurch gekennzeichnet, dass**
die wenigstens eine Funktionseinrichtung (54) ein Fahrlicht, ein Rückfahrlicht, ein Blinklicht, ein Türkontaktschalter, ein Türverschlusssensor, ein Türverschlusssystem, eine Rückfahrkamera, ein Abstandssensor, eine Überwachungseinrichtung für den rückwärtigen Verkehr, eine IR-Kamera und/oder ein Display ist.

10. Kofferaufbau nach einem der Ansprüche 1 bis 9,
**dadurch gekennzeichnet, dass**
eine feste Bodenstruktur (23) vorgesehen ist und dass die Bodenstruktur (23) ein Bodenpaneel (39) umfassend eine einen Ladeboden (48) bereitstellende Oberbodenlage (40), eine Unterbodenlage (41) zum Aufsetzen auf ein Chassis (C) oder Fahrwerk (F) des Nutzfahrzeugs (N) und eine zwischen der Oberbodenlage (40) und der Unterbodenlage (41) vorgesehene Bodenlage (42) aufweist, wobei die Bodenstruktur (23) einen Bodenquerholm (43) und die Seitenwände (6) jeweils einen Seitenholm (20,21) aufweisen, und dass der Bodenquerholm (22), der Dachquerholm (19) und die Seitenholme (20,21) zu einem gemeinsamen Rückwandrahmen (10) gefügt sind.

11. Kofferaufbau nach Anspruch 10,
**dadurch gekennzeichnet, dass**
wenigstens eine Rückwandtür (11) und/oder wenigstens ein Rolltor von einer den Rückwandrahmen (10) verschließenden geschlossenen Stellung in eine den Rückwandrahmen (10) zum Be- und/oder Entladen des Kofferaufbaus (1) durch den Rückwandrahmen (10) freigebende geöffnete Stellung verstellbar ist.

12. Verfahren zur Herstellung eines Kofferaufbaus (1) nach einem der Ansprüche 1 bis 10,
- bei dem wenigstens eine Funktionseinrichtung (54) wenigstens teilweise in einen Innenraum (53) des Dachholms (19) eingebracht wird,
- bei dem nach dem Einbringen der Funktionseinrichtung (54) wenigstens in den Großteil des verbleibenden Innenraums (53) des Dachquerholms (19) ein extrudierter und/oder geschäumter Kunststoff eingebracht wird,
- bei dem zwischen der inneren Decklage (26) und der äußeren Decklage (27) des Dachpaneels (5) die Kernlage (28) aus einem extrudierten und/oder geschäumten Kunststoff vorgesehen wird und
- bei dem nach dem separaten Einbringen des Kunststoffs in den Dachquerholm (19) und das Dachpaneel (5) und nach dem separaten wenigstens teilweisen Aushärten des Kunststoffs in dem Dachquerholm (19) und dem Dachpaneel (5) der Dachquerholm (19) mit dem Dachpaneel (5) verbunden wird.

13. Verfahren nach Anspruch 12,
- bei dem vor oder nach dem Einbringen des Kunststoffs in den Innenraum (53) des Dachquerholms (19) der Dachquerholm (19) mit einem Verteilerkasten (57) ausgerüstet wird und
- bei dem vor oder während dem Ausrüsten des Dachquerholms (19) mit dem Verteilerkasten (57) ein Steckverbindungselement (59) der wenigstens eine Funktionseinrichtung (54) und/oder eine Anschlussleitung (55) der wenigstens einen Funktionseinrichtung (54) in den Verteilerkasten (57) eingebracht wird.

14. Verfahren nach Anspruch 12 oder 13,
- bei dem das Steckverbindungselement (59) der wenigstens einen Funktionseinrichtung (54) und/oder die Anschlussleitung (55) der wenigstens einen Funktionseinrichtung (54) nach dem Verbinden des Dachquerholms (19) mit dem Dachpaneel (5) mit einem Steckverbindungselement (67,69) einer Anschlussleitung (60,63,68) des Dachpaneels (5) und/oder des Laderaums (14) und/oder mit der Anschlussleitung (60,63,68) des Dachpaneels (5) und/oder des Laderaums (14) verbunden wird und
- bei dem, vorzugsweise, nach dem Verbinden der Anschlussleitungen (55,60,63,68) und/oder Steckverbindungselemente (59,61,67,69) der Verteilerkasten (57) mit einem Deckelelement (66) des Verteilerkastens (57) verschlossen wird.

15. Verfahren nach Anspruch 12 bis 14,
- bei dem die Anschlussleitung (63,68) des Laderaums (14) in einen dem Dachpaneel (5) und/oder dem Seitenwandpaneel (7), insbesondere dem Kantenbereich zwischen Dachpaneel (5) und Seitenwandpaneel (7) zugeordneten Laderaumkanal (64) eingebracht wird und
- bei dem, vorzugsweise, die Anschlussleitung (63,68) nach der Montage des Laderaumkanals (64) an dem Dachpaneel (5) und/oder der Seitenwand (7) in den Laderaumkanal (64) eingebracht wird.
